**Europäisches Patentamt**

**European Patent Office**

**Office européen des brevets**

⑩

(11) Publication number: **0 178 780**
**B1**

(12) ## EUROPEAN PATENT SPECIFICATION

(45) Date of publication of patent specification: **28.02.90**

(21) Application number: **85306482.2**

(22) Date of filing: **12.09.85**

(51) Int. Cl.⁵: **G 01 B 7/31**

(54) **Shaft coupling displacement monitoring.**

(30) Priority: **13.09.84 GB 8423173**

(43) Date of publication of application:
**23.04.86 Bulletin 86/17**

(45) Publication of the grant of the patent:
**28.02.90 Bulletin 90/09**

(84) Designated Contracting States:
**BE DE FR IT NL SE**

(56) References cited:
**CH-A- 372 848**
**US-A-4 115 925**
**US-A-4 148 013**

(73) Proprietor: **Flexibox Limited**
**Nash Road Trafford Park**
**Manchester M17 1SS (GB)**

(72) Inventor: **Britton, John D.**
**88 Derby Road**
**Melbourne Derby, DE7 1FL (GB)**

(74) Representative: **Massey, Alexander et al**
**MARKS & CLERK Suite 301 Sunlight House Quay**
**Street**
**Manchester, M3 3JY (GB)**

Courier Press, Leamington Spa, England.

## Description

This invention relates to the monitoring of shaft displacement and particularly to monitoring relative displacements between two shafts at a coupling between the shafts, the coupling being of the sort which is intended to accommodate such relative displacements between the shafts as may be found to exist.

Although the coupling may be of the kind which accommodates relative displacements it is nevertheless very much more preferable if the shafts are substantially in line during normal operation otherwise the coupling will be under stress and will impose greater forces on the adjacent driving and driven machines.

Unfortunately, the accurate positioning of two shafts while the system is cold and at rest is not satisfactory because almost invariably, once the system is at working speed and temperature and has reached equilibrium, several factors tend to disturb that alignment. For instance thermal expansion of the shafts will usually result in some relative axial displacement between them and meshing of gears may result in angular misalignment.

Thus it has been proposed that a method of "hot displacement monitoring" should be employed where the displacement between two shafts is monitored while the system is running at equilibrium and then making any necessary adjustments when the system is stopped.

U.S. Patent No. 4148013 describes such an arrangement where a proximity probe or a strain gauge or a differential transformer is used to give an indication of shaft misalignment. That indication is transmitted from the sensing means on the shaft to receiving means off the shaft through a rotary transformer. The use of a differential transformer is unsatisfactory in a number of ways. Firstly it is necessary for there to be three coils, one primary and two secondary with a ferromagnetic rod providing the magnetic coupling between the secondary and primary coils. Thus in physical terms the differential transformer is long and may present windage problems at high rotary speeds. Because the rod is coupling two coils its angular disposition within the coils is critical and since the rod is connected to one coupling flange and the coils to the other and since the coupling may be angularly misaligned, an arrangement must be provided to keep the rod square in the coils. This usually involves the use of a spring which introduces further problems of spring bounce at high rotary speeds if significant angular misalignment exists. The rod is usually a sliding fit within the coils. This may present frictional problems and increased wear of the parts.

The use of a proximity probe is not entirely satisfactory either. There are either of the inductive or of the capacitive type and neither provides a linear output in response to misalignment. Furthermore, if it is of the capacitive type there can be dielectric problems caused by oil mist or the like if that should be present. With either type there occurs calibration problems if no account is taken of the non-linearity of proximity probes or else linearising means must be provided.

It is therefore an object of this invention to provide an improved method of shaft coupling monitoring.

In accordance with this invention there is provided a shaft coupling monitoring system comprising a coil supported by a flange disposed on one side of the coupling and rotating with a first one of two co-rotating shafts, and a ferromagnetic rod supported by a flange disposed on the other side of the coupling and rotating with a second one of the two co-rotating shafts, the coil axis extending generally parallel to the axis of rotation of the first shaft and the rod extending generally parallel to the axis of rotation of the second shaft and into the coil, whereby a displacement of one shaft relative to the other alters the relative dispositions of the rod and the coil so as to affect the inductance of the coil, characterised in that the coil is supported within the said flange disposed on the said one side of the coupling, the coil forms part of an alternating current circuit and operating parameter of which is variable in dependence upon the inductance of the coil and which variable operating parameter is monitored to give an indication of the position of the rod with respect to the coil and hence of the relative displacement between the shafts.

By employing the above system the disadvantage of a long differential transformer is overcome as only a single coil of few turns, perhaps about 25, is used. Moreover such a coil can easily be burried in the flange of many types of coupling so that almost no windage problems are encountered at even the highest rotary speeds.

Significantly, the rod can be a loose fit in the coils and it can therefore be fixed rigidly to one flange of the coupling. This is because any variation in the angular position of the rod in the coil does not affect the inductance of the coil unless the length of rod within the coil is also changed. Thus no spring is required, and the attendent problems associated with the use of springs is avoided.

There are no capacitive problems either, should an oil mist be present in the vicinity of the coupling; and with the rod inside the coils the inductance of the coil is linearly dependent on flange displacement of the coupling. Thus no account need to be taken of non-linearity associated problems nor need any linearisation techniques be employed.

Preferably, the variable frequency of said oscillating circuit is mixed with a reference frequency to provide a signal including a resultant frequency representative of the difference between the variable and reference frequencies.

The resultant frequency may be arranged to amplitude modulate a drive signal generated in a secondary winding of a rotary transformer by a primary winding of said transformer, said resultant frequency being detectable in a driving signal applied to the primary winding through reflected impedance changes from the secondary winding and being filtered from said driving signal to provide said indication of the position of the rod with respect to the coil and hence of the degree of displacement between the shafts.

This arrangement has the further advantage that only one pair of coils is employed to provide both the motive power for the circuit detecting displacement and the means for communicating the detected displacement off the shaft.

The invention is further described hereinafter with reference to the accompaning drawings in which:

Fig. 1 is a schematic illustration of a shaft coupling including a rod and coil arrangement according to the invention;

Fig. 2 is a circuit diagram of electronic components enabling the invention to be put into effect and being disposed within the coupling as shown for instance in Fig. 1;

Fig. 3 is a block diagram of further electronic components, such components being those disposed off the shaft;

Figs. 4 and 5 illustrate the mechanical structure of another embodiment of the invention; and

Fig. 6 illustrates the circuitry of the embodiment of Figs. 4 and 5.

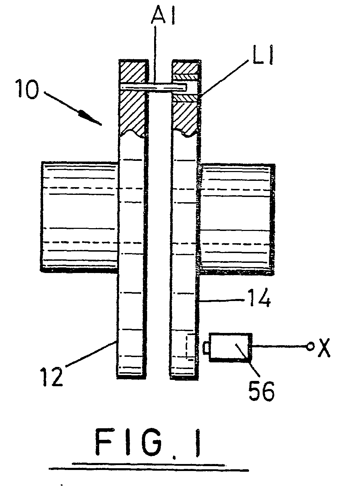

In Fig. 1 a coupling 10 comprises two flanges one an input flange 12 and the other an output flange 14. Each is disposed on a respective shaft not shown, and each is connected to the other by some flexible means allowing rotary motion to be transmitted through the coupling but at the same time allowing some axial movement between the flanges 12, 14 and also some angular movement therebetween.

On either flange 12, 14 (it is not important which, in this case it is the flange 14) there is disposed a coil L1 and within the confines of the coil L1 is arranged a ferrite rod A1 which is mounted on the other flange 12. The rod A1 is adjustable by means not shown in Fig. 1 such that its rest position is more or less half-way into the coil L1. Thus axial movement in either direction of the rod in the coil will change the amount of rod without the coil and hence the latter's inductance. Although ferrite or the like is the preferred material for the rod A1, since that has perhaps the greatest influence on the inductance of the coil L1, almost any remotely ferromagnetic material will do.

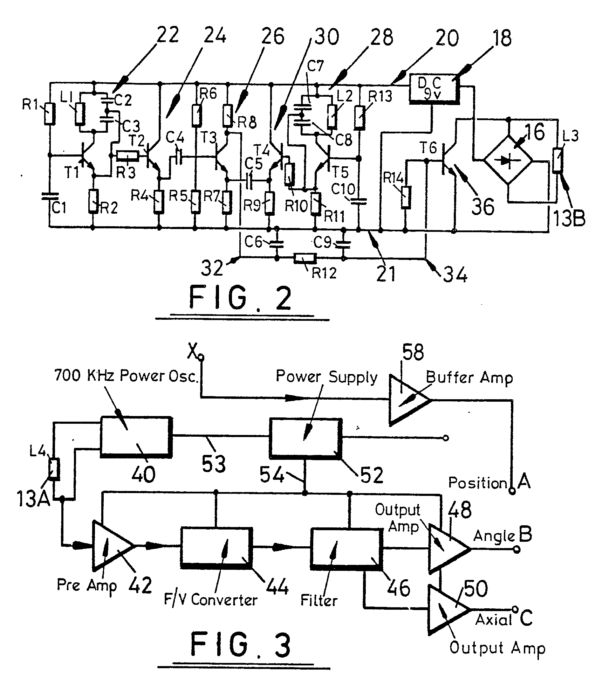

The coil L1 forms a part of the electronic circuit illustrated in Fig. 2 which conveniently is mounted on a small printed circuit board carried inside the confines of the hub of one flange of the coupling 10. The board is powered by a rotary transformer 13 A & B the secondary winding L3 of which is shown in Fig. 2. That also is mounted on one hub and is driven by a primary winding L4 (see Fig. 3) mounted off the coupling.

The AC output of the coil L3 is rectified by a full wave rectifier 16 whose output is smoothed by DC regulator 18 whose output in turn is fed to lines 20, 21.

The coil L1 forms the inductor in a Colpitts oscillator 22, comprising capacitors C2 and C3, transistor T1, resistors R2 and R1 and capacitor C1. The inductor L1 is so designated as to ensure that the oscillator frequency varies linearly with the position of the rod or armature (A1).

A transistor T2 provides an emitter follower buffer stage 24 which isolates the oscillator circuit 22 from a mixer stage 26.

A transistor T5 and its associated components L2, C7 and C8, R13, C10 and R11, form another Colpitts oscillator 28 of fixed frequency. The output of this oscillator 28 is a reference frequency which is fed through a similar buffer stage 30 using transistor T4 to the mixer stage 26. The reference frequency is typically about 10 KHz larger than the maximum value for said variable frequency.

The mixer stage 26 comprises a transistor T3 which acts as a sum and difference mixer with the variable frequency from transistor T1 being fed to the base of transistor T3, and the fixed frequency signal from transistor T5 being fed to the emitter of transistor T3.

The nominal output of transistor T1, the variable oscillator, may be in the range of 130 to 170 KHz, for example about 150 KHz and this is mixed with the output of transistor T5 arranged to operate at for example 170 KHz. The resultant output of the transistor T3 in line 32 therefore includes a frequency of 20 KHz for zero displacement of the flanges 12, 14.

The system is so scaled that, for maximum deflection of the flanges either plus or minus from the nominal datum, the output of transistor T1 changes between about 140 KHz and 160 KHz giving a resultant output of 30 KHz to 10KHz in line 32.

The function, therefore, of the rotating electronics of Fig. 2 is such that it provides a linearly changing frequency, proportional to changes in flange displacement.

The resultant output in line 34 after having been filtered somewhat by capacitors C6 and C9 and resistor R12, which form a low-pass filter, is used to switch transistor T6, which acts as a shunt modulator 36 across the rotor power and signal coil L3.

The circuit of Fig. 2 is powered by a 700 KHz power oscillator circuit 40 (see Fig. 3) connected to the primary winding or stator coil L4 of the rotary transformer 13.

The effect of the transistor T6 in the shunt modulator 36, is effectively to shunt the rotor coil L3 by a low impedance at a repetition rate equal to the frequency appearing from transistor T3.

The switching effect of the transistor T6 is detectable on the primary coil L4 due to the effects of the reflected impedance changes. This results in an amplitude modulation of the 700 KHz power signal proportional to the output of transistor T3.

This amplitude modulated signal is fed through a pre-amplifier 42 into a frequency-to-voltage converter 44, which in turn provides an output voltage proportional to the frequency of the modulated signal and therefore proportional to change in flange position.

That change in flange position will occur through two sources, firstly angular misalignment and secondly axial displacement. Thus a change in frequency which repeats at the rate of revolution of the shaft gives a precise indication of the degree of angular misalignment: the greater the change then the greater the angular misalignment. The average frequency is of course an indication of the axial displacement: the greater the average then the nearer together the two flanges approach one another. Thus the signal emanating from the frequency to voltage converter 44 has two components of information and these are extracted and separated in filter 46 before being applied to power amplifiers 48, 50 which in turn provide outputs representative of the angular misalignment and axial displacement respectively.

A power supply 52 drives the oscillator circuit 40 via line 53 and also components 42, 44, 46, 48 and 50 via line 54.

A reference probe 56 provides a signal at X (see Fig. 1) which in Fig. 3 is applied to a buffer amplifier 58, the output of which gives an indication of the rotational position of the coupling 10 at any given moment. By appropriate phasing of the position signal at A with the angular misalignment signal at B, not only the degree of angular misalignment of the coupling can be determined but also the rotational position of such misalignment can be established.

How such information is relayed to the end user is a matter of choice and various techniques could be used such as to display the information directly on to an oscilloscope or perhaps after manipulation thereof in a microprocessor. This forms no part of the present invention however.

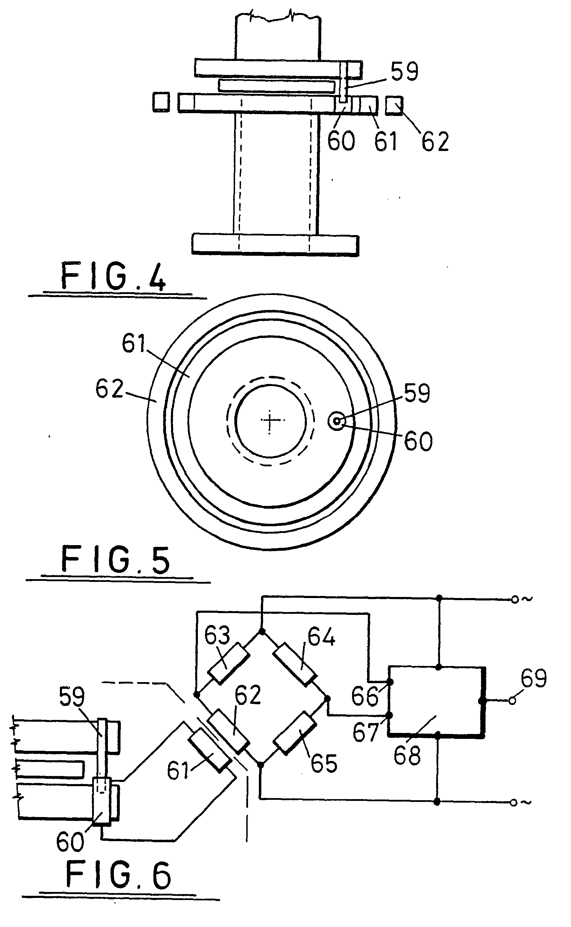

In applications of the invention where high temperatures are present, for example temperatures above 100°C, it is difficult to mount electronics on rotating components of the system if a high degree of reliability is to be achieved. In more general applications it may also be desirable to provide an arrangement in which no rotating electronics are required. Such an arrangement is described below with reference to Figs. 4 to 6.

With reference to Figs. 4 and 5, a ferromagnetic rod or armature 59 is mounted on one flange of a coupling and extends into a coil 60 mounted on the other flange of the coupling. A further annular coil 61 is mounted on the same flange as coil 60, and an annular stator coil 62 is arranged around the coil 61.

Referring to Fig. 6, coils 62 and 63, together with resitors 64 and 65 (resistors 64 and 65 could also be inductive elements in certain applications), form a full Wheatstone Bridge. The bridge is supplied with an A.C. voltage at a suitable amplitude and suitable frequency, the amplitude and frequency being largely dependent upon the mechanical configuration of the coupling and installation. This frequency will usually but not necessarily lie in the region of 100 KHz to 700 KHz.

The coil 62 forms the stator coil of the shaft system with components 63, 64 and 65 mounted in a suitable housing adjacent to or with coil 62.

The rotating coil 61 is mounted at a convenient point on the shaft, for example as illustrated on the shaft flange assembly. The coils 60 and 61 are connected in parallel. The armature 59 can move within the coil 60 due to any relative movements between the two flanges.

In operation, the inductance change in coil 60 is arranged to be large for small movements of the armature 59, compared to any inductance changes due to small movements in the relative positions of coils 61 and 62 that may arise during normal running. With the flanges in a nominally aligned position, the system is arranged such that the bridge is in balance and the output at terminals 66 and 67 of the bridge is at a minimum value. Any relative movement of the flanges causes the position of the armature relative to coil 60 to change, thus changing the inductance of coil 60. This causes the bridge to become unbalanced due to the coupling between coils 61 and 62. This causes an output to appear at terminals 66 and 67, the magnitude of the voltage being in direct relationship to the misalignment of the flanges.

The bridge is excited with an alternating voltage, and thus it is possible to compare the phase of the output voltage appearing at terminals 66 and 67 with the frequency of the A.C. supply using a phase detector circuit 68. The circuit will produce an output 69 which is a D.C. voltage. The magnitude of the D.C. voltage represents the magnitude of the misalignment and the sign of the D.C. voltage represents the movement, being either plus or minus from a datum point of the flanges.

The system of Figs. 4 to 6 gives various advantages. Primarily, there are no rotating electronics, and therefore the system should be capable of operating at high temperatures, e.g. 150°C. The system should therefore be capable of continuous duty operation throughout the life of the plant with which it is associated. Further, the simple structure should offer significant financial savings in the final product cost. Finally the low power circuitry is inherently safe, making spark generation most unlikely so that the system can be used in hazardous areas.

In many applications, it is necessary to have two couplings interconnecting a nominally aligned pair of shafts, one coupling being mounted on the end of each shaft with an intermediate member extending between the two couplings. In order to fully monitor relative displacements between the shafts in such an arrangement, that is to monitor axial displacement, lateral misalignment, and angular displacement, each coupling must be provided with a monitoring system in accordance with the invention. A less complete picture of relative displacement can be obtained however using just one system mounted on one of the couplings.

## Claims

1. A shaft coupling monitoring system comprising a coil (L1, 60) supported by a flange (14) disposed on one side of the coupling and rotating with a first one of two co-rotating shafts, and a ferromagnetic rod (A1, 59) supported by a flange (12) disposed on the other side of the coupling and rotating with a second one of the two co-rotating shafts, the coil axis extending generally parallel to the axis of rotation of the first shaft and the rod extending generally parallel to the axis of rotation of the second shaft and into the coil, whereby a displacement of one shaft relative to the other alters the relative dispositions of the rod and coil so as to affect the inductance of the coil, characterised in that the coil (L1, 60) is supported within the said flange disposed on the said one side of the coupling, the coil forms part of an alternating current circuit (22; 61, 62) an operating parameter of which is variable in dependence upon the inductance of the coil and which variable operating parameter is monitored to give an indication of the position of the rod with respect to the coil and hence of the relative displacement between the shafts.

2. A system as claimed in claim 1, wherein the alternating current circuit is an oscillating circuit (22) and the variable operating parameter is the frequency of oscillation of the oscillating circuit.

3. A system as claimed in claim 2, in which said oscillating circuit is a first Colpitts oscillator (22).

4. A system as claimed in claim 2 or 3, in which the variable frequency of said oscillating circuit (22) is mixed with a reference frequency to provide a signal (32) including a resultant frequency representative of the difference between the variable and reference frequencies.

5. A system as claimed in claim 4, in which the resultant frequency is arranged to amplitude modulate a driving signal generated in a secondary winding (L3) of a rotary transformer by a primary winding (L4) of said transformer said resultant frequency being detectable in a driving signal applied to the primary winding through reflected impedance changes from the secondary winding and being filtered from said driving signal to provide said indication of the position of the rod with respect to the coil and hence of the degree of misalignment of the shafts.

6. A system as claimed in any one of claims 2 to 5, in which said variable frequency is employed to give an indication of the angular misalignment (B) between the shafts by noting the change in said variable frequency per revolution and of axial displacement (C) between the shafts by noting the average level of said variable frequency per revolution.

7. A system as claimed in claim 6, in which a positional reference probe (56) is arranged to provide a position signal from which the rotational position of the shafts at a given moment can be determined and from which the angular direction of said angular misalignment can be established.

8. A system as claimed in claim 5 and 6, in which said driving signal is applied to a frequency to voltage converter (44) the output of which is filtered to provide a first signal (A) representative of the degree of angular misalignment and a second signal (B) representative of the degree of axial displacement.

9. A system as claimed in claim 7 and 8 in which the position signal (A) is phased with said first signal to determine the angular position of any angular misalignment between the shafts.

10. A system as claimed in claim 4 and or any of claims 5 to 9 when dependent on claim 4 in which the reference signal is provided by a second Colpitts oscillator (28).

11. A system as claimed in claim 4 or any of claims 5 to 10 when dependent on claim 4, in which said variable frequency is in the range 130 to 170 KHz, and said reference frequency is about 10 KHz larger than the maximum value for said variable frequency.

12. A system as claimed in claim 5 and 11 in which said driving signal has a frequency in the range 400 to 1000 KHz.

13. A system according to claim 1, wherein the said operating parameter of the alternating current circuit is a voltage the magnitude of which varies in dependence upon the inductance of the coil.

14. A system according to claim 13, wherein the alternating current circuit comprises a further coil (61) mounted on the said one side of the coupling and connected to the said coil (60), and a stator coil (62) magnetically coupled to the further coil.

15. A system according to claim 14, wherein the further coil (61) is annular and arranged around the periphery of the said one side of the coupling, and the stator coil (62) is annular and arranged around but spaced from the further coil.

16. A system according to claim 15, wherein the stator coil (62) is connected in one arm on a Wheatstone bridge (62—65) supplied with an alternating current signal, the bridge output being the said variable operating parameter.

17. A system according to claim 16, wherein a phase detector (68) is provided to monitor the phase difference between the bridge output and the alternating current signal.

## Patentansprüche

1. Überwachungssytem für Wellenkupplungen mit einer Spule (L1, 60), die an einem auf einer Kupplungsseite vorgesehenen Flansch (14) gelagert ist, der sich mit einer ersten von zwei miteinander umlaufenden Wellen dreht, und mit einem ferromagnetischen Stab (A1, 59), der an einem auf der anderen Kupplungsseite vorgesehenen Flansch (12) gelagert ist, der sich mit einer zweiten der zwei miteinander umlaufenden Wellen dreht, wobei sich die Spulenachse im wesentlichen parallel zu der Drehachse der ersten Welle erstreckt, und der Stab sich im wesentlichen parallel zu der Drehachse der zweiten Welle und in die Spule hinein erstreckt, wodurch eine Verschiebung der einen Welle relativ zu der anderen die relative Anordnung des Stabes und der Spule so verändert, daß die Induktivität der Spule beeinflußt wird, dadurch gekennzeichnet, daß die Spule (L1, 60) in dem an der einen Kupplungsseite vorgesehenen Flansch gelagert ist, daß die Spule zu einem Wechselstromkreis (22; 61, 62) gehört, von dem ein Betriebsparameter in Abhängigkeit von der Induktivität der Spule veränderbar ist, und dieser variable Betriebsparameter überwacht wird, um die Position des Stabes bezüglich der Spule und somit die relative Verschiebung zwischen den Wellen anzugeben.

2. System nach Anspruch 1, dadurch gekennzeichnet, daß es sich bei dem Wechselstromkreis um einen Schwingkreis (22) handelt und der variable Betriebsparameter die Schwingungsfrequenz des Schwingkreises darstellt.

3. System nach Anspruch 2, dadurch gekennzeichnet, daß es sich bei dem Schwingkreis um einen ersten Colpitts-Oszillator (22) handelt.

4. System nach Anspruch 2 oder 3, dadurch gekennzeichnet, daß die variable Frequenz des Schwingkreises (22) mit einer Bezugsfrequenz vermischt wird, um ein Signal (32) mit einer resultierenden, die Differenz zwischen der variablen Frequenz und der Bezugsfrequenz darstellenden Frequenz zu liefern.

5. System nach Anspruch 4, dadurch gekennzeichnet, daß die resultierende Frequenz so angeordnet ist, daß ein in einer Sekundärwicklung (L3) eines rotierenden Transformators von einer Primärwicklung (L4) dieses Transformators erzeugtes Antriebssignal amplitudenmoduliert wird, wobei die resultierende Frequenz in einem über reflektierte Impedanzwechsel von der Sekundärwicklung an die Primärwicklung angelegten Antriebssignal nachweisbar ist und zur Angabe der Position des Stabes bezüglich der Spule und damit zur Angabe des Versetzungsgrades der Wellen aus dem Antriebssignal gefiltert wird.

6. System nach einem der Ansprüche 2 bis 5, dadurch gekennzeichnet, daß mit der variablen Frequenz die Winkelversetzung (B) zwischen den Wellen durch Registrieren des Wechsels der variablen Frequenz pro Umdrehung und die Axialverschiebung (C) zwischen den Wellen durch Registrieren der durchschnittlichen Höhe der variablen Frequenz pro Umdrehung angegeben wird.

7. System nach Anspruch 6, dadurch gekennzeichnet, daß ein Bezugslagefühler (56) zum Liefern eines Lagesignals vorgesehen ist, aus dem die Drehlage, die die Wellen zu einem bestimmten Zeitpunkt einnehmen, bestimmt werden kann und mit dem die Richtung der Winkelversetzung bestimmt werden kann.

8. System nach Anspruch 5 und 6, dadurch gekennzeichnet, daß das Antriebssignal an einen die Frequenz in Spannung umwandelnden Umrichter (44) angelegt ist, dessen Leistung zur Erhaltung eines ersten, den Grad der Winkelversetzung wiedergebenden Signals (A) und eines zweiten, den Grad der Axialverschiebung wiedergebenden Signals (B) ausgefiltert wird.

9. System nach Anspruch 7 und 8, dadurch gekennzeichnet, daß das Lagesignal (A) mit dem ersten Signal in Phase gebracht wird, um die Lage jeder Winkelversetzung zwischen den Wellen zu ermitteln.

10. System nach Anspruch 4 und/oder nach einem der Ansprüche 5 bis 9, wenn dieser auf Anspruch 4 rückbezogen ist, dadurch gekennzeichnet, daß das Bezugssignal von einem zweiten Colpitts-Oszillator (28) geliefert wird.

11. System nach Anspruch 4 oder nach einem der Ansprüche 5 bis 10, wenn dieser auf Anspruch 4 rückbezogen ist, dadurch gekennzeichnet, daß die variable Frequenz in einem Bereich von 130 bis 170 KHz liegt, und daß Bezugsfrequenz etwa 10 KHz größer als der Maximalwert der variablen Frequenz ist.

12. System nach Anspruch 5 und 11, dadurch gekennzeichnet, daß die Frequenz des Antriebssignals in einem Bereich von 400 bis 1000 KHz liegt.

13. System nach Anspruch 1, dadurch gekennzeichnet, daß der Betriebsparameter des Wechselstromkreises eine Spannung ist, deren Größe sich in Abhängigkeit von der Induktivität der Spule ändert.

14. System nach Anspruch 13, dadurch gekennzeichnet, daß der Wechselstromkreis eine weitere, auf der einen Seite der Kupplung befestigte und mit der Spule (60) in Verbindung stehende Spule (61) und eine magnetisch mit der weiteren Spule gekoppelte Ständerwicklung (62) aufweist.

15. System nach Anspruch 14, dadurch gekennzeichnet, daß die weiter Spule (61) ringförmig ausgebildet und um den Umfang der einen Kupplungsseite herum angeordnet ist, und daß die Ständerwicklung (62) ringförmig ausgebildet und um die weitere Spule herum, aber mit Abstand dazu angeordnet ist.

16. System nach Anspruch 15, dadurch gekennzeichnet, daß die Ständerwicklung (62) in einem Arm an einer mit einem Wechselstromsignal gespeisten Wheatstonebrücke (62—65) angeschlossen ist, wobei die Brückenleistung den variablen Betriebsparameter darstellt.

17. System nach Anspruch 16, dadurch gekennzeichnet, daß ein Phasendetektor (68) vorgesehen ist, der die Phasendifferenz zwischen der Brückenleistung und dem Wechselstromsignal überwacht.

**Revendications**

1. Un dispositif pour le monitorage d'un accouplement d'arbres comportant une bobine (L1, 60) supportée par un flasque (14) disposé sur l'un des côtés de l'accouplement et tournant avec le premier des deux arbres co-entraînés en rotation, et une tige ferromagnétique (A1, 59) supportée par un flasque (12) disposé sur l'autre côté de l'accouplement, et tournant avec le second des deux arbres co-entraînés en rotation, l'axe de la bobine s'étendant généralement parallèlement à l'axe de rotation du premier arbre et la tige s'étendant généralement parallèlement à l'axe de rotation du second arbre et à l'intérieur de la bobine, de telle sorte qu'un déplacement de l'un des arbres par rapport à l'autre modifie les dispositions relatives de la tige et de la bobine de manière à affecter l'inductance de la bobine, caractérisé en ce que la bobine (L1, 60) est supportée dans ledit flasque disposé sur ledit premier côté de l'accouplement, la bobine fait partie d'un circuit à courant alternatif (22; 61, 62) dont un paramètre de fonctionnement varie en fonction de l'inductance de la bobine ce paramètre de fonctionnement variable est surveillé pour donner une indication de la position de la tige par rapport à la bobine et, de là, du déplacement relatif entre les arbres.

2. Un dispositif selon la revendication 1, dans lequel le circuit à courant alternatif est un circuit oscillant (22) et le paramètre de fonctionnement variables est la fréquence d'oscillation du circuit oscillant.

3. Un dispositif selon la revendication 2, dans lequel ledit circuit oscillant est un premier oscillatuer de Colpitts (22).

4. Un dispositif selon la revendication 2 ou 3 dans lequel la fréquence variable dudit circuit oscillant (22) est mélangée avec une fréquence de référence pour fournir un signal (32) comportant une fréquence résultante représentative de la différence entre les fréquences variables et de référence.

5. Un dispositif selon la revendication 4, dans lequel la fréquence résultante est destinée à moduler l'amplitude d'un signal d'entraînement engendré dans un enroulement secondaire (L3) d'un transformateur rotatir par un enroulement primaire (L4) dudit transformateur, ladite fréquence résultante pouvant être détectée dans un signal d'entraînement appliqué à l'enroulement primaire par l'intermédiaire des changements d'impédance renvoyés par l'enroulement secondaire et étant filtrée dudit signal d'entraînement pour fournir ladite indication de la position de la tige par rapport à la bobine et de là, de l'amplitude du défaut d'alignement des arbres.

6. Un dispositif selon l'une quelconque des revendications 2 à 5 dans lequel ladite fréquence variable est utilisée pour donner une indication du défaut d'alignement angulaire (B) entre les arbres en notant le changement dans ladite fréquence variable pour un tour et du déplacement axial (C) entre les arbres en notant le niveau moyen de ladite fréquence variable pour un tour.

7. Un dispositif selon la revendication 6, dans lequel une sonde de référence de position (56) est mise en place pour fournir un signal de position à partir duquel la position en rotation des arbres a un moment donné peut être déterminée et à partir duquel la direction angulaire dudit défaut d'alignement angulaire peut être déterminée.

8. Un dispositif selon les revendications 5 et 6, dans lequel ledit signal d'entraînement est appliqué à une fréquence au convertisseur de tension (44) dont la sortie est filtrée pour fournir un premier signal (A) représentatif de l'amplitude du défaut d'alignement angulaire et un second signal (B) représentatif de l'amplitude du déplacement axial.

9. Un dispositif selon la revendication 7 et 8, dans lequel le signal de position (A) est en phase avec le premier signal pour déterminer la position angulaire d'un quelconque défaut d'alignement angulaire entre les arbres.

10. Un dispositif selon la revendication 4 et/ou l'une quelconque des revendications 5 à 9, lorsqu'elles dépendent de la revendication 4, dans lequel le signal de référence est fourni par un second oscillateur de Colpitts (28).

11. Un dispositif selon la revendication 4 ou l'une quelconque des revendications 5 à 10, lorsqu'elles dépendent de la revendication 4, dans lequel ladite fréquence variable est dans la gamme de 130 à 170 KHz, et ladite fréquence de référence est environ supérieur de 10 KHz à la valeur maximale pour ladite fréquence variable.

12. Un dispositif selon les revendications 5 et 11 dans lequel ledit signal d'entraînement a une fréquence dans la gamme de 400 à 1000 KHz.

13. Un dispositif selon la revendication 1, dans lequel ledit paramètre de fonctionnement du circuit à courant alternatif est une tension dont l'amplitude varie en fonction de l'inductance de la bobine.

14. Un dispositif selon la revendication 13, dans lequel le circuit à courant alternatif comprend une autre bobine (61) montée sur ledit premier côté de l'accouplement et reliée à ladite bobine (60), et une bobine de stator (62) couplée de façon magnétique à l'autre bobine.

15. Un dispositif selon la revendication 14, dans lequel l'autre bobine (61) est annulaire et disposée autour de la périphérie dudit premier côté de l'accouplement et la bobine de stator (62) est annulaire et disposée autour mais espacée de l'autre bobine.

16. Un dispositif selon la revendication 15, dans lequel la bobine de stator (62) est connectée dans un bras sur un pont de Wheatstone (62—65) alimenté par un signal à courant alternatif, la sortie du pont étant ledit paramètre de fonctionnement variable.

17. Un dispositif selon la revendication 16, dans lequel un détecteur de phase (68) est prévu pour le monitorage de la différence de phase entre la sortie du pont et le signal à courant alternatif.

FIG. 1

**EP  0 178 780  B1**

FIG. 2

FIG. 3

FIG.4

FIG.5

FIG.6